# EUROPEAN PATENT APPLICATION

(11) **EP 3 366 139 A1**
(43) Date of publication of application: **29.08.2018**
(21) Application number: 18158461.6
(22) Date of filing: 23.02.2018
(51) Int. Cl.: A01N 65/00, A01N 65/06, A01N 65/08, A01N 65/22, A01N 65/26, A01N 25/02, A01N 25/34, A01P 7/00, A01P 3/00

(54) **MOLECULAR SIEVE-BASED PET PRODUCTS**

(30) Priority: 28.02.2017 US 201715444900
(71) Applicant: Worldwise, Inc., Novato, California 94949 (US)
(72) Inventor: ROGERS, Tracy, Novato, CA 94949 (US); DOMINGUEZ, Jacob, Novato, CA 94949 (US); MURRER, Andrew, Novato, CA 94949 (US); CAMARA, Edgar, Novato, CA 94949 (US)
(74) Representative: Bell, Mark

(57) **Abstract**

A pet product having an outer shell defining its shape and fill material enclosed within the outer shell. A pet -related infusion composition is contained within a carrier therefore, the carrier, in the form of a zeolite molecular sieve, provides for the release of the infusion composition within the compressible fill material.

## Description

### TECHNICAL FIELD

The present invention is directed to pet products such as pet beds and pet toys which are intended to incorporate certain infusion components in order to provide enhancements for such products. These include attractants, calming agents, insect repellents, pain relievers, odor controllers and animal repellents. Such active ingredients are contained within the interstices of a suitable zeolite molecular sieve to provide for the slow release and unwanted dissipation when laundering such products thus extending their usable lifecycle therein.

### BACKGROUND OF THE INVENTION

The marketplace is replete with innumerable pet products. Many of those products being defined by an outer shell material which dictates their shape and function and fill material contained therein. Typical examples of such products include pet beds and chew toys. As to the latter, a stuffed rodent, such as a mouse, would typically include an infusion composition of catnip or silver vine to enhance a cat's interest and provide suitable stimulation. However, it has been found that if the pet owner wishes to launder the product to extend its useful life, the catnip or silver vine active ingredients would rapidly dissipate and, as a result, after a single laundering, the catnip effects would be virtually undetectable.

It is thus an object of the present invention to provide a pet product containing an infusion composition within a carrier which addresses the limitations of such products of the prior art.

A further object of the present invention is to provide a pet product containing an infusion composition within a carrier which is capable of being laundered without the complete dissipation of the infusion composition and its resulting beneficial properties.

### SUMMARY OF THE INVENTION

In a pet product comprising an outer shell defining its shape and fill material enclosed within said outer shell, the improvement comprising a pet -related infusion composition within a carrier therefore, said carrier, in the form of a zeolite molecular sieve, providing for the release of said infusion composition within said fill material.

### BRIEF DESCRIPTION OF THE FIGURES

Fig. 1 is a typical pet product produced according to the present invention.
Fig. 2 is a cross-section of the pet product of Fig. 1 taken along line 2-2 thereof.
Fig. 3 is yet another typical pet product produced according to the present invention.
Fig. 4 is a cross-section of the pet product of Fig. 3 taken along line 4-4 thereof.
Fig. 5 is a side view of an apparatus useful in producing pet beds and like products configured to produce such products while embodying the teachings of the present invention.

### DETAILED DESCRIPTION OF THE INVENTION

Novel features which are characteristic of the invention, as to organization and method of operation, together with further objects and advantages thereof will be better understood from the following description considered in connection with the accompanying drawings, in which preferred embodiments of the invention are illustrated by way of example. It is to be expressly understood, however, that the drawings are for illustration description only and are not intended as definitions of the limits of the invention. The various features of novelty which characterize the invention are recited with particularity in the claims.

There has been broadly outlined more important features of the invention in the summary above and in order that the detailed description which follows may be better understood, and in order that the present contribution to the art may be appreciated. There are, of course, additional features of the invention that will be described hereinafter and which will form additional subject matter of the claims appended hereto. Those skilled in the art will appreciate that the conception upon which this disclosure is based readily may be utilized as a basis for the designing of other structures, methods and systems for carrying out the several purposes of the present invention. It is important therefore, that claims be regarded as including such equivalent constructions insofar as they do not depart from the spirit and scope of the present invention.

Certain terminology and the derivations thereof may be used in the following description for convenience and reference only, and will not be limiting. For example, words such as "upward," "downward," "left," and "right" refer to directions in the drawings to which reference is made unless otherwise stated. Similar words such as "inward" and "outward" refer to directions toward and away from, respectively, the geometric center of a device or area and designated parts thereof. Reference in the singular tense include the plural and vice versa, unless otherwise noted.

As noted previously, there are a plethora of pet products including beds, chew toys and stuffed animals which would benefit from the inclusion of certain active ingredients such as animal attractants, calming agents, insect repellents, pain relievers, odor controllers and animal repellents. However, the same products, in order to extend their useful lives, should be laundered and once laundered, active ingredients contained therein are basically washed away leaving the pet products devoid of the useful contributions that were made by them. It has surprisingly been determined that these infusion compositions can be maintained within the pet products and diffused in a controlled manner by including them within a suitable zeolite molecular sieve.

Zeolites are generally composed of silicon, aluminum and oxygen in an open three-dimensional framework. Such materials have been used for quite some time as absorbents, and for industrial separations and purifications. The aluminosilicate framework is negatively charged and attracts positive cations that reside in cages to compensate for the negative charge of the framework. Zeolites can be hydrophilic or hydrophobic mainly depending upon their Si/Al ratio, the zeolitic hydrophilic properties increasing as the aluminum content in the zeolite framework increases and vice versa. The localized electrostatic poles between the positively charged cations in the negatively charged zeolitic framework strongly attract highly polar molecules, resulting in a hydrophilic structure.

The choice of the appropriate zeolite for use herein would depend upon the nature of the infusion composition and its carrier. For example, catnip oil and catnip hydrosol, the latter being hydrophilic, not only acts as a feline stimulant but is also 10 times more effective than DEET in repelling mosquitoes. Such materials also act as potential repellents against houseflies, mites and ticks. Thus their use in pet beds provide obvious advantages. However, as noted previously, pet beds which contain catnip oil and catnip hydrosol only exhibit their useful properties for a limited period of time noting further that if a pet owner was to launder the bed containing these infusion compositions, they would basically be washed away during the laundering process and thus no longer available. As some of the non-limiting examples below illustrate, often times, a hydrophobic zeolite molecular sieve would be the appropriate choice because not only are a number of the proposed infusion compositions, such as catnip oil hydrophobic, but active ingredients for use herein are often times used in conjunction with carrier oils which are also hydrophobic.

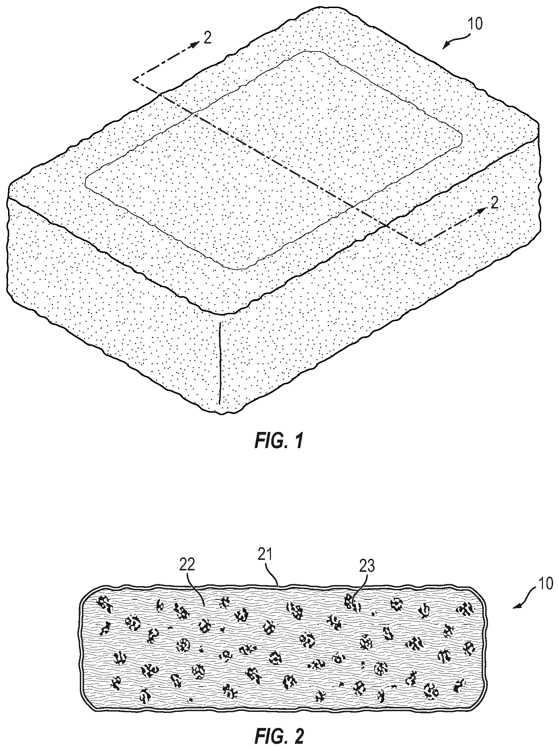

In turning to Figs. 1 and 2 a typical pet bedding product is illustrated which includes outer shell material 21 defining its shape and cushioning fill material 22 such as chopped memory foam or recycled polyester fibers. Zeolite molecular sieve 23 containing a pet related infusion composition is dispersed within outer shell material 21 in order to provide the bed with its desired properties.

Table 1 recites several employed formulations used in such bedding products for flea control, odor control and as calming agents:

**TABLE 1**

| | Drops of Oil | Volume (ml) | Weight (g) | % by Weight |
|---|---|---|---|---|
| **FLEA** | | | | |
| Neem Oil | 12 | 0.28 | 0.216 | 0.0073 |
| Cedarwood Oil | 3 | 0.60 | 0.042 | 0.0014 |
| Catnip Oil | 12 | 0.28 | 0.276 | 0.0094 |
| Carrier Oil | | 27.34 | 28.966 | 0.9819 |

| **CALM** | | | | |
|---|---|---|---|---|
| Lavendar Oil | 12 | 0.26 | 0.168 | 0.0057 |
| Geranium Oil | 12 | 0.26 | 0.168 | 0.0057 |
| Carrier Oil | | 27.98 | 29.164 | 0.9886 |

| **ODOR CONTROL** | | | | |
|---|---|---|---|---|
| Geranium Oil | 12 | 0.22 | 0.18 | 0.0061 |
| Peppermint Oil | 3 | 0.60 | 0.06 | 0.0020 |
| Carrier Oil | | 27.68 | 29.26 | 0.9919 |

Although those skilled in the art would appreciate the appropriate selection of the zeolite molecular sieve for use herein depending, for example, upon whether the pet related infusion composition was hydrophilic or hydrophobic, a suitable such hydrophobic zeolite molecular sieve is commercially available as the ACS Material ZSM-5 absorbent. In preparation, the zeolite molecular sieve is pulverized and then pelletized. Although pelletization can include a binder, binders tend to clog the zeolite open network and thus the selection of zeolite molecular sieves which can be pelletized without a binder are preferred. The ZSM-5 absorbent is such material. Once pelletized, the pellets are immersed in a suitable pet related infusion composition, the latter being both absorbed and adsorbed by the zeolite molecular sieve.

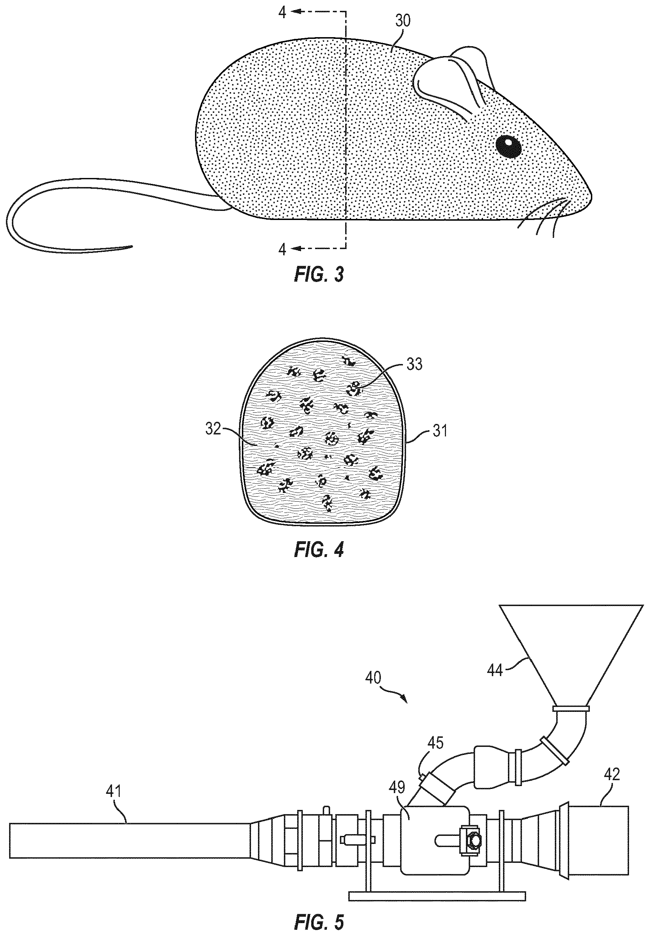

As previously noted, a sought after benefit of practicing the present invention is to create a pet product which can be laundered repeatedly without an immediate loss of the beneficial properties of the pet related infusion composition. Without the present invention, it was found that a single washing of a pet product such as the pet bed of Figs. 1 and 2 or the pet toy of Figs. 3 and 4 would result in a complete loss of the pet related infusion composition. By contrast, in practicing the present invention, the sought after beneficial properties are essentially maintained even after repeated washings. As an illustration, a pet bed such as that depicted herein was subjected to three washings using a typical domestic washing machine throughout the machine's standard wash and dry cycles. Results, determine via GC/MS analysis of soxhelet extractions, revealed the following:

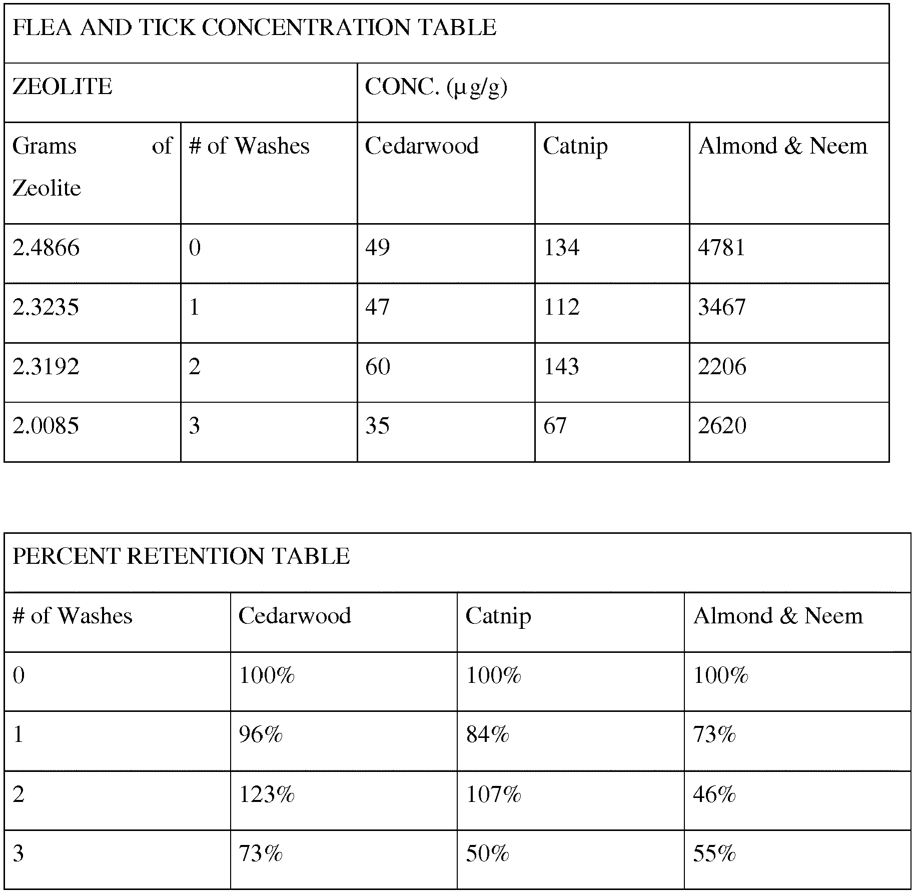

In turning to Figs. 3 and 4, a typical pet toy in the form of stuffed mouse 30 is depicted. Pet toy 30 is defined by outer shell 31 defining its shape and fill material 32 having, interspersed therein, zeolite molecular sieve 33 containing a suitable pet related infusion composition. As was the case with pet bed 10, pet toy 30 can include, as pet related infusion compositions, those that act as animal attractants, calming agents, insect repellents, insecticides, pain relievers, odor control agents and animal repellents. For example, neems oil can be used as a flea and tick insecticide as it disrupts the insect's reproductive cycles. It is also a strong antifungal agent and antioxidant. Catnip oil and catnip hydrosol not only act as feline stimulants but are also 10 times more effective than DEET in repelling mosquitoes. These materials also act as potent repellents against houseflies, mites and ticks. Lavender oil also acts to repel fleas and ticks and can be a calming agent by reducing anxiety by soothing the animal's central nervous system. Geranium oil is an antifungal and antibacterial agent and also exhibits calming properties while further repelling ticks. Texas red cedarwood oil enhances circulation and acts as a potent natural insect repellent. Such materials can be incorporated within suitable carrier oils such as a member selected from the group consisting of coconut oil, sweet almond oil and jojoba oil.

Additional testing has been carried out to further characterize present invention and to confirm those benefits derived therefrom. The results of such testing are provided in the following examples.

### EXAMPLE 1

### WASH-ABILITY TESTING OF ZEOLITES WITH FLEA AND TICK INFUSION BLEND

### Dosing

The flea and tick infusion blend was made with 13.3 ml neem oil, 3.4 ml cedarwood oil, and 13.3 ml of catnip hydrosol. Ten ml's of flea and tick infusion oil was used to soak 8 grams of zeolite molecular sieve overnight. A 2 g sample of infused zeolites were placed in four fiber filled pillow and labeled W0, W1, W2, and W3 to mock an actual dog bed.

### Washing

The samples were then washed on a regular cycle with Gain soap at a warm temperature for 30 minutes. After each wash the appropriate sample was taken out W1, W2, and W3. Finally, the samples were taken and placed in a dryer at a low temperature setting until dry. The zeolites from each wash were then collected and crushed to begin extraction process.

### Extraction

Hexane was placed in a round bottom flask in a heating mantle, with the soxhlet extraction device placed above it. Glass wool was placed inside the soxhlet and the crushed sample was then added into the soxhlet. The condenser was now placed above the soxhlet with an inlet and an outlet connected to an ice bath. The vacuum and heating mantle were then turned on to begin the run. The sample was then washed with hexane for two hours. The sample was filtered with a filtered syringe and placed in a flask connected to a vacuum for evaporation of the hexane. The oil was left behind; 1 ml of hexane was added to dilute the sample for GCMS analysis.

### GC/MS Analysis

One ml of the sample solution was taken and added into a vile for analysis on the HP 7890A GC with a 5975C MSD.

Using grapheme molecular sieve zeolite as a carrier, testing was conducted to determine the potential retention of the flea and tick infusion oil in zeolites over three wash cycles.

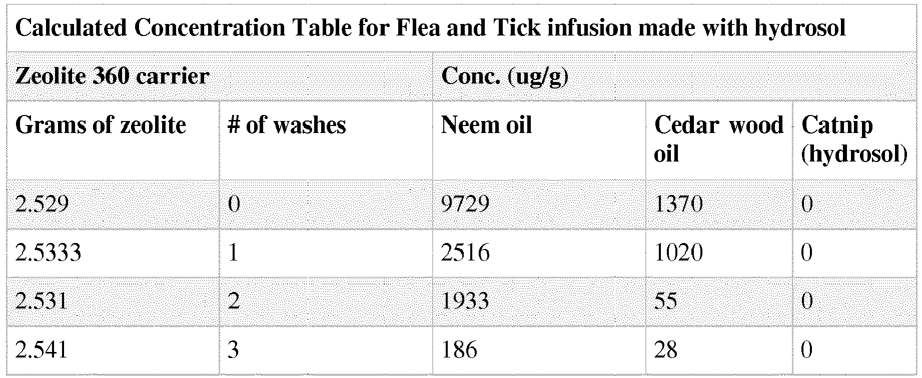

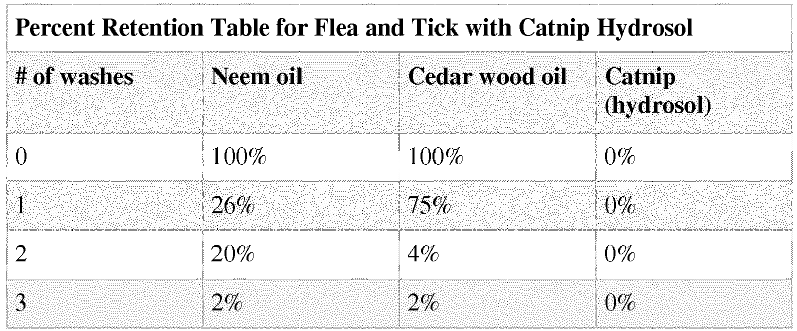

The loss of both neem oil and cedar wood oil from wash 0 to wash 3 shows an inconsistent loss. The catnip hydrosol may not be present due to the hydrophobic nature of the zeolite being used resisting interaction with the aqueous hydrosol or the other two oils being used, masking the available hydrosol concentration.

### WASH-ABILITY TEST RESULTS FOR CATNIP HYDROSOL ONLY - ZEOLITE CARRIER

Using grapheme molecular sieve zeolite as a carrier, the previous tests concluded with the absence of hydrosol in the flea, tick, and mosquito infusion oil. This testing was done to determine if the hydrosol alone would interact with the zeolites and allow for the available active ingredient to be absorbed and retained over three washes.

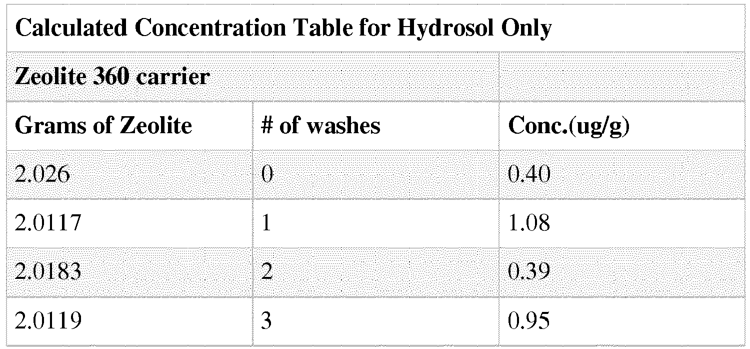

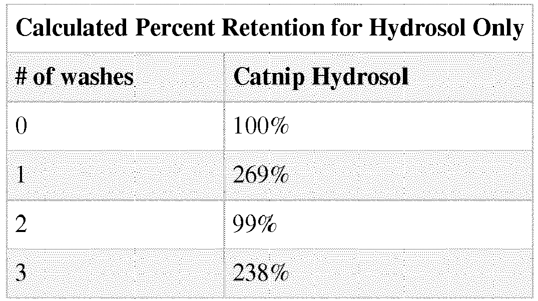

The ability of the catnip hydrosol alone to remain in the zeolites after three washes indicates that one of the other ingredients in the flea, tick, and mosquito infusion formulation may be causing the absence of the hydrosol in previous tests. Testing concludes that the catnip hydrosol alone can remain in the zeolite after three wash cycles.

### EXAMPLE 2

### WASH-ABILITY TESTING OF ZEOLITES WITH CALMING INFUSION BLEND TESTING PROCEDURE

### Dosing

A flea and tick infusion blend was made with 15 ml geranium oil and 15 ml lavender oil. Ten ml's of calming infusion oil was used to soak 8 grams of zeolites molecular sieve overnight. A 2 g sample of infused zeolites were placed in four fiber filled pillow and labeled W0, W1, W2, and W3 to mock an actual dog bed.

### Washing

The samples were then washed on a regular cycle with Gain soap at a warm temperature for 30 minutes. After each wash the appropriate sample was taken out W1, W2, and W3. Finally, the samples were taken and placed in a dryer at a low temperature setting until dry. The zeolites from each wash were then collected and crushed to begin extraction process.

### Extraction

Hexane was placed in a round bottom flask in a heating mantle, with the soxhlet extraction device placed above it. Glass wool was placed inside the soxhlet and the crushed sample was then added into the soxhlet. The Condenser was now placed above the soxhlet with an inlet and an outlet connected to an ice bath. The vacuum and heating mantle were then turned on to begin run. The sample was then washed with hexane for two hours. The sample was filtered with a filtered syringe and placed in a flask connected to a vacuum for evaporation of the hexane. The oil was left behind; 1 ml of hexane was added to dilute the sample for GCMS analysis.

### GC/MS Analysis

One ml of the sample solution was taken and added into a vile for analysis on the HP 7890A GC with a 5975C MSD.

### WASH-ABILITY TEST RESULTS FOR CALMING INFUSION BLEND - ZEOLITE CARRIER

Using grapheme molecular sieve zeolite as a carrier, testing was performed on the calming infusion blend (CIB) without a carrier oil to determine the potential retention of the ingredients after three washes.

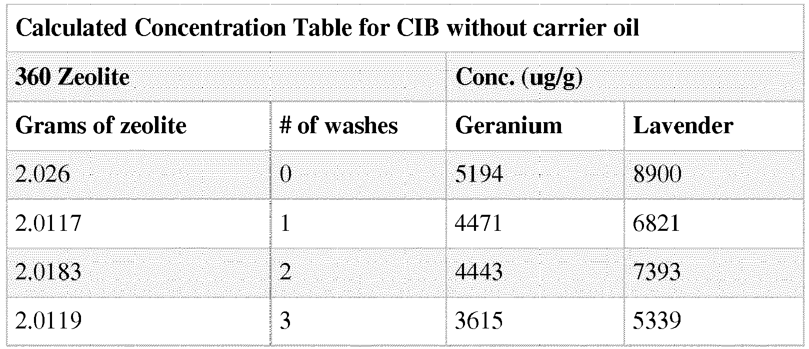

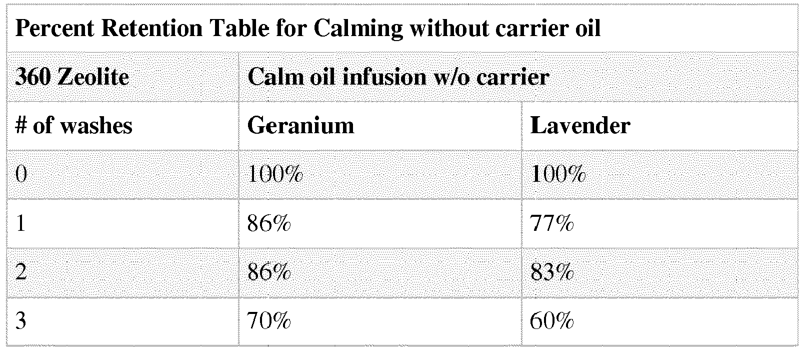

At an even mixture of 50% of each essential oil, the retention shown are characteristic of the oil without the aid of a carrier oil. A carrier oil is expected to lower the volatility of the essential oils diluted mixed within it to increase their overall retention. Testing shows that the geranium and lavender oils can remain in the zeolites though three wash cycles.

### EXAMPLE 3

### WASH-ABILITY TEST RESULTS FOR CALMING INFUSION BLEND WITH CARRIER OIL - ZEOLITE CARRIER

Using grapheme molecular sieve zeolite molecular sieve as a carrier, testing was performed on the (CIB) with carrier oil, 0.6 ml of geranium, 0.6 ml lavender and 28.8 ml of almond oil, to determine the effects the carrier oil may have on the retention of the ingredients in the blend.

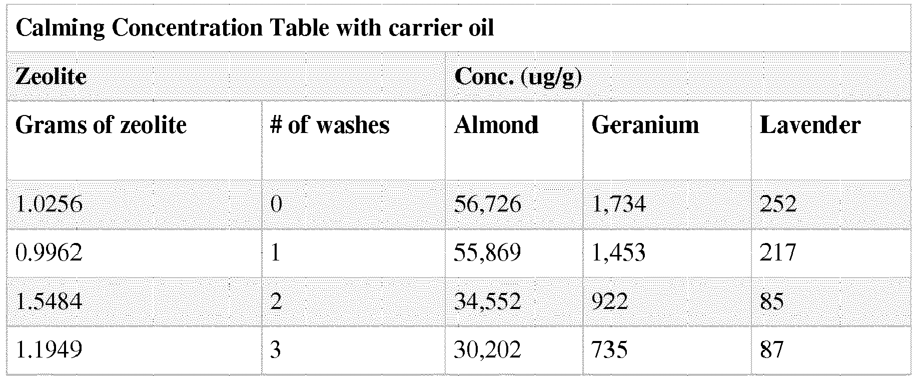

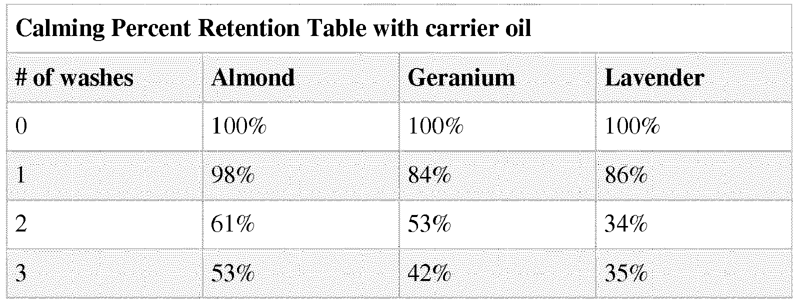

Retention of the ingredients dropped in comparison to the testing done on the same infusion oil without carrier oil. Both formulations had no issue remaining in the zeolite throughout the three wash cycles, further showing the resilience of the lavender and geranium oils to being washed out. Testing has concluded that the calming infusion oil has a greater retention at a 1:1 mixture than with the addition of carrier oil.

### EXAMPLE 4

### WASH-ABILITY TESTING OF ZEOLITES WITH FLEA AND TICK INFUSION BLEND

### Dosing

The flea and tick infusion blend was made with 13.3 ml neem oil, 3.4 ml cedarwood oil, and 13.3 ml of catnip hydrosol. Ten ml's of flea and tick infusion oil was used to soak 8 grams of zeolite overnight. A 2 g sample of infused zeolite was placed in four fiber filled pillow and labeled W0, W1, W2, and W3 to mock an actual dog bed.

### Washing

The samples were then washed on a regular cycle with Gain soap at a warm temperature for 30 minutes. After each wash the appropriate sample was taken out W1, W2, and W3. Finally, the samples were taken and placed in a dryer at a low temperature setting until dry. The zeolites from each wash were then collected and crushed to begin extraction process.

### Extraction

Hexane was placed in a round bottom flask in a heating mantle, with the soxhlet extraction device placed above it. Glass wool was placed inside the soxhlet and the crushed sample was then added into the soxhlet. The Condenser was now placed above the soxhlet with an inlet and an outlet connected to an ice bath. The vacuum and heating mantle were then turned on to begin run. The sample was then washed with hexane for two hours. The sample was filtered with a filtered syringe and placed in a flask connected to a vacuum for evaporation of the hexane. The oil was left behind; 1 ml of hexane was added to dilute the sample for GCMS analysis.

### GC/MS Analysis

One ml of the sample solution was taken and added into a vile for analysis on the HP 7890A GC with a 5975C MSD.

### WASH-ABILITY TEST RESULTS FOR FLEA, TICK, AND MOSQUITO INFUSION MADE WITH CATNIP OIL - ZEOLITE CARRIER

Using grapheme molecular sieve zeolite as a carrier, testing was performed on a flea, tick, and mosquito infusion oil made with catnip essential oil in place of catnip hydrosol to determine if the hydrophobic nature of the zeolites and the aqueous ingredient in previous FTM infusion formulations were influencing the results.

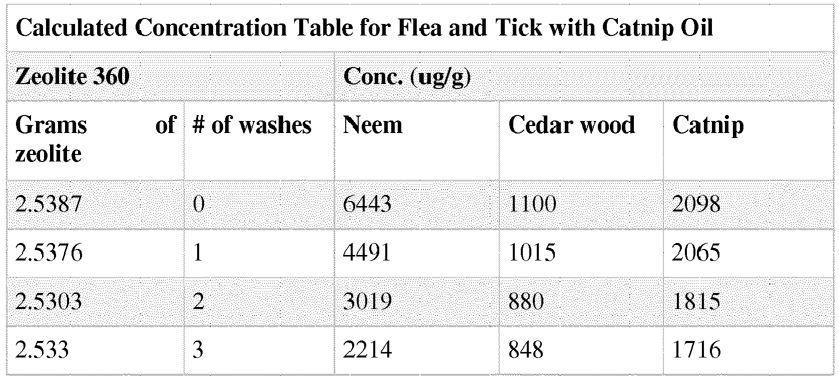

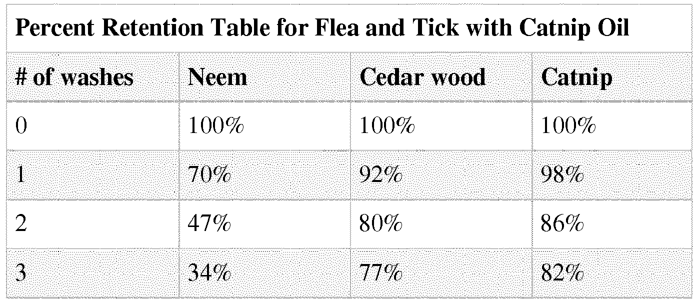

Although this test mixture demonstrates some level of depletion from wash 0 to 3, usable levels are retained after all cycles. Tests illustrated that an oil based flea and tick repellent formulation may be effectively infused in a graphene molecular sieve zeolite carrier, resisting depletion despite enduring 3 household wash and dry cycles.

Although the introduction of a suitable zeolite molecular sieve -containing pet infusion composition to the interior of a pet product can be carried out in numerous ways, a convenient way of doing so, in the fabrication of a pet bed, is taught in Applicant's U. S. Patent Application Serial No. 15/239,393 filed on August 17, 2016, the disclosure which is incorporated by reference herein. Specifically, in reference to Fig. 5, injector 40 is provided with low friction tube 41 and substantially circular inlet 42 being devoid of any obstruction along its longitudinal axis which would interfere with the conveying of lofted fiber during a bed fill process. Injector 40 further allows for the metered dosing of additives, such as zeolite molecular sieve-containing infusion compositions. Such additives, in the form of pellets are introduced by placing them within hopper 44 which are then fed to the interior of injector 40 at quick change cam lock coupling 49 through the introduction of pressurized gas through opening 45. Venturi holes (not shown) can be employed to expel solid additives introduced to hopper 44 into the lofted fibers passing through injector 40.

The above disclosure is sufficient to enable one of ordinary skill in the art to practice the invention, and provides the best mode of practicing the invention presently contemplated by the inventor. While there is provided herein a full and complete disclosure of the preferred embodiments of the invention, it is not desired to limit the invention to the exact construction, dimensions, relationships, or operations as described. Various modifications, alternative constructions, changes and equivalents will readily occur to those skilled in the art and may be employed as suitable without departing from the true spirit and scope of the invention. Such changes might involve alternative materials, components, structural arrangements, sizes, shapes, forms, functions, operational features or the like. Therefore, the above description and illustration should not be considered as limiting the scope of the invention, which is defined by the appended claims.

## Claims

1. In a pet product comprising an outer shell defining its shape and fill material enclosed within said outer shell, the improvement comprising a pet-related infusion composition within a zeolite molecular sieve, said the zeolite molecular sieve providing for the release of said infusion composition within said fill material.

2. The pet product of claim 1 wherein said zeolite molecular sieve comprises a member selected from the group consisting of hydrophilic molecular sieves and hydrophobic molecular sieves.

3. The pet product of claim 1 wherein said zeolite molecular sieve is pulverized and thereupon pelletized prior to introduction to said fill material.

4. The pet product of claim 3 wherein said pelletized molecular sieve is immersed within said infusion composition prior to introduction to said fill material.

5. The pet product of claim 1 wherein said infusion composition comprises an active ingredient and a carrier oil.

6. The pet product of claim 5 wherein said active ingredient comprises a member selected from the group consisting of an animal attractant, a calming agent, an insect repellent, an insecticide, a pain reliever, an odor control agent, an antifungal agent and an animal repellent.

7. The pet product of claim 6 wherein said carrier oil comprises a member selected from the group consisting of coconut oil, sweet almond oil and jojoba oil.

8. The pet product of claim 6 wherein said insect repellent comprises a flea repellent comprising neem oil and cedarwood oil.

9. The pet product of claim 6 wherein said animal attractant and insect repellent comprises a member selected from the group consisting of catnip oil and catnip hydrosol.

10. The pet product of claim 6 wherein said calming agent and insect repellent comprises a member selected from the group consisting of lavender oil and geranium oil.

11. The pet product of claim 6 wherein said odor control and antifungal agent comprises a member selected from the group consisting of geranium oil and peppermint oil.

12. The pet product of claim 1 wherein said pet product is a member selected from the group consisting of pet beds and pet toys.
